Europäisches Patentamt

European Patent Office

Office européen des brevets

(11) Publication number: **0 431 738 A1**

# EUROPEAN PATENT APPLICATION

(21) Application number: **90311504.6**

(22) Date of filing: **19.10.90**

(51) Int. Cl.⁵: **F16B 37/04**, F16B 45/00, B23P 11/00

(30) Priority: **05.12.89 GB 8927481**

(43) Date of publication of application:
**12.06.91 Bulletin 91/24**

(84) Designated Contracting States:
**DE ES FR GB IT SE**

(71) Applicant: **Metallifacture Limited**
**Mansfield Road**
**Redhill Nottingham NG5 8PY(GB)**

(72) Inventor: **Williams, Keith Frederick**
**Mayfield, 16 Rutland Lane**
**Bottesford, Nottinghamshire(GB)**

(74) Representative: **MacGregor, Gordon et al**
**ERIC POTTER & CLARKSON St. Mary's Court**
**St. Mary's Gate**
**Nottingham, NG1 1LE(GB)**

(54) Hook member for a latching device and method of making same.

(57) The hook member may be used for clamping a spare wheel in a vehicle and comprises a hollow body (12) having a hook portion (13) at one end. The body mounts a nut (30) engaged in the hollow at the opposite end of the body. The nut is formed in one piece with transverse lugs (32) engaged in apertures (17,18) in the body to secure the nut in position. The nut may have grooves (33) which receive portions of the body to assist in holding parts (15,16) of the body together. The nut may be axially secured between an edge of each aperture and deformed tabs (20) on the body.

This invention relates to a hook member for a latching device and method of making same.

It has been the practice for some years to mount a spare wheel in a motor vehicle in a cage slung beneath a floor of the vehicle. The case is pivoted at one side and is releasably latchable at the opposite side. The latching device used includes a screw-threaded stem dependent from the floor and accessible from above the floor. A hook member engages with the cage and screw-engages with the stem. The stem can be rotated by a tool, engaged with a formation located above the floor, and this causes the hook member to move up or down the stem to secure or release the cage. In the secured position, the stem clamps an element of the cage in the hook.

The hook member is axially made from a metal forging and a metal tube. The forging defines the hook-shaped part of the member and is drilled to receive the stem. A second drilling operation produces a counterbore for receiving the tube, which is welded to the forging. The opposite end of the tube is then internally screw tapped to engage the threads of the stem.

In an improved hook member disclosed in GB-A-2108565 hook member is formed from a blank of sheet material with a body and a hook portion at one end of the body. The screw thread is provided by a separately formed nut circumferentially fitted in the body, at the end opposite to the hook portion, and the nut is welded to the body at that end to secure the nut axially and rotationally in the body.

Welding of the nut in the body of the hook member is an expensive procedure and there is risk of the weld failing in use.

The present invention provides an inexpensive alternative to welding of the nut, which provides a secure and neat mounting of the nut in the body.

The pre-characterising part of Claim 1 is based on the disclosure of GB-A-2108565.

The characterising features of the invention are as set out in the characterising part of Claim 1 and comprise the body having at least two apertures spaced from the end of the body opposite to a hook portion, and the nut having transverse lugs formed in one piece with the nut and the body is formed around the nut to engage the lugs in respective said apertures in the body so as to secure the nut axially and rotationally in the body.

The invention also resides in a method of making a hook member as defined in Claim 1.

FR-A-2599097 discloses an assembly of a pair of hollow tubes in a T-formation, in which the upright of the T has a pair of opposed apertures. A nut can be inserted through one of the apertures and has a lug engaging in the other aperture to prevent axial movement of the nut relative to the tube. The cross-piece of the T is secured to the upright of the T by means of a screw passing through the cross-piece and engaged with the nut.

This principle is unsuited to the problem of circumferentially fitting a nut in a tubular part and securing the nut axially and rotationally. The nut of FR-A-2599097 is not circumferentially fitted in the tube, so that the nut is removable radially from the tube, if the screw is removed from the nut. Some other means, such as welding, would be required to secure the nut radially.

Reference is now made to the accompanying drawings, wherein:-

Fig 1 is a side elevation of a partly-formed hook member body;

Fig 2 is a view on arrow 'A' in Fig 1;

Fig 3 is a similar view to Fig 2, showing additional forming of the body;

Fig 4 is a perspective view of a nut;

Fig 5 is a perspective view of a part of the body housing the nut; and

Fig 6 shows the completed hook member according to the invention.

The body 11 of the hook member is preferably made from a single blank of sheet metal, which is formed to define a hollow cylindrical part 12 and a hook 13 at one end of the body. The hook may be formed by welding together two hook elements of the blank, as disclosed in GB-A-2108565.

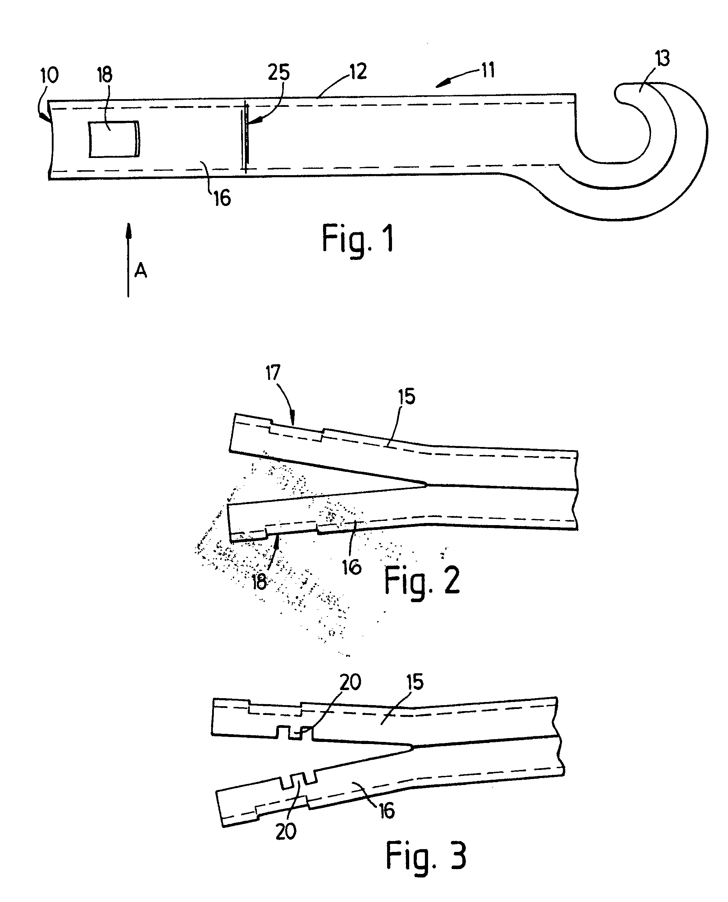

The blank is, however, additionally formed with a pair of apertures 17,18 and is so formed that the part-formed body, as shown in Figs 1 and 2, has two semi-cylindrical portions 15,16 at the end remote from the hook 13. These body portions 15,16 are integral with the rest of the cylindrical part 12 and diverge, as shown in Fig 2. In the part-formed body, the apertures 17,18 are spaced from the opposite end 10 to the hook portion 13 and are located in respective body portions 15,16 such that, when the body portions are brought together to form the whole cylindrical body part 12, the apertures are diametrically opposite each other.

Before bringing the body portions 15,16 together, each opposite axial edge of each body portion 15,16 is formed with a tab 20, so that a total of four tabs are provided, two being shown in Fig 3.

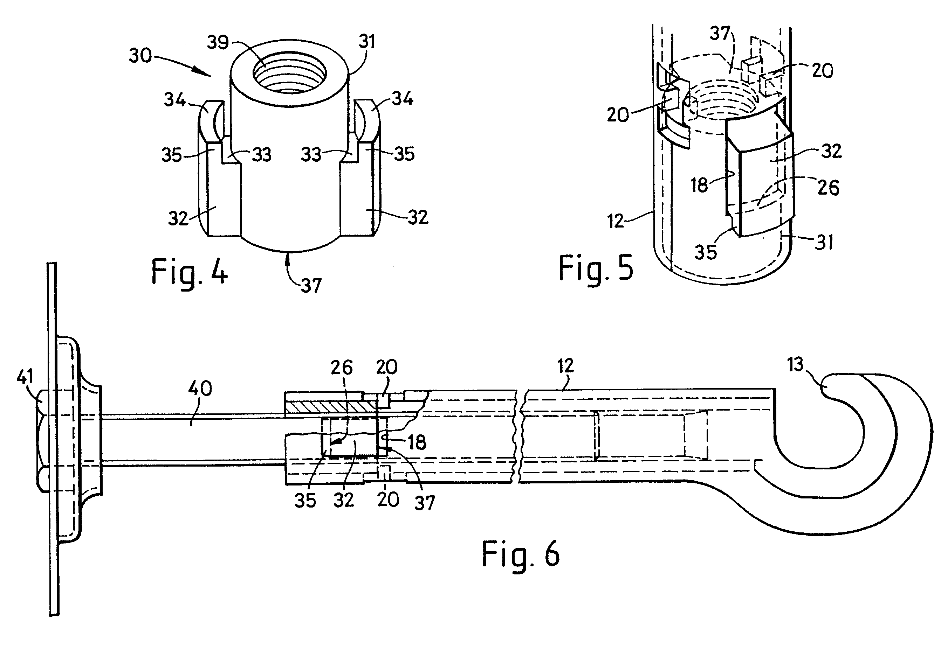

A nut 30, having an internal screw thread 39, is provided, as shown in Figs 4 and 5, comprising a cylindrical part 31 formed with a pair of diametrically opposed, outwardly projecting lugs 32. Each lug is formed with an arcuate groove 33 in a radial face 34 of the lug and adjacent to the cylindrical part 31.

The outer wall of the cylindrical part 31 is complementary to the hollow interior of the cylindrical body part 12 and each arcuate groove 33 is complementary to the cylindrical body part 12.

To assemble the hook member, the nut 30 is engaged between the part-cylindrical portions 15,16 of the body, with a lug 32 engaged in an aperture, 17,18. The two part-cylindrical portions are then brought together with the parts hinging along lines, such as 25 in Fig 1. This forms the whole cylindrical body part 12 with the two lugs 32 engaged in the respective apertures 17,18 and with the nut circumferentially fitted in the body part.

The nut 30 is then axially moved to engage a circumferential portion 26 (Figs 5 and 6) of the cylindrical part adjacent each aperture 17,18, in a respective arcuate groove 33 of the nut. Ridges 35 of the lugs, defined between the grooves 33 and the outer walls of the lugs, thereby prevent radial separation of the two part-cylindrical portions 15,16, the body effectively being captivated between the lugs.

The nut is thereby secured against rotation in the body part and axial securance is effected by deformation of the tabs 20, so that they engage the adjacent axial end face 37 of the nut. The nut is thereby captivated between the tabs and the circumferential portions 26.

As shown in Fig 6, a stem 40 is screw-engaged, in use, with the nut, the stem terminating in a hexagonal head 41.

It is envisaged that the nut may be secured axially and rotationally in the body part by engagement of the lugs in the apertures and without the provision of the grooves 33 and the tabs 20.

## Claims

1. A hook member of the type having an elongate hollow body (11) with an internal screw thread (39) and having a hook portion (13) at one end, the member being screw-engageable with a stem (40) which can be rotated for moving the hook member between secured and released positions, the hollow body having a separately formed nut (30) circumferentially fitted in the body adjacent the opposite end (10), and secured axially and rotationally in the body, so as to define the internal screw thead (39), characterised in that the body(11) has at least two apertures (17,18) spaced from said-opposite end (10), the nut (30) has transverse lugs (32) formed in one piece with the nut, and the body is formed around the nut to engage the lugs in respective said apertures (17,18), so as to secure the nut axially and rotationally in the body.

2. A hook member according to Claim 1, wherein each lug (32) has a groove (33) which receives a circumferential portion (26) of the body adjacent the respective aperture (17,18) and engaging means (20) is provided at a position axially spaced from the grooves (33) to engage the nut (30), whereby the nut is axially captivated between said engaging means (20) and said circumferential portions (26) and the body (11) is radially captivated between the lugs.

3. A hook member according to Claim 2, wherein said engaging means comprises at least one tab (20) integrally formed with the body (11) and deformed to engage the nut (30).

4. A method of making a hook member according to Claim 1, comprising providing a pair of part-circular section portions (15,16) of the body (11) adjacent the end (10) remote from the hook portion (13), forming an aperture (17,18) in each said body portion at a position spaced from said remote end (10), providing said nut (30) having a pair of transverse lugs (32) formed in one piece with the nut, engaging the nut between said body portions, with the lugs engaged in respective apertures, and bringing the body portions together to entrap the nut.

5. A method according to Claim 4, wherein the hook member is formed from a sheet metal blank with said part-circular section body portions (15,16) being integral parts of the blank.

6. A method according to Claim 5, wherein each lug (32) is formed with a groove (33) and the nut is moved axially relative to the body to engage circumferential portions (26) of the body portions in the grooves, and securing the nut axially relative to the body, whereby the lugs assist in holding the body portions together.

7. A method according to Claim 6, including forming tabs (20) on the blank and deforming the tabs for engaging the nut at positions axially spaced from the grooves (33), so as to secure the nut axially relative to the body.

Fig. 1

Fig. 2

Fig. 3

Fig. 4

Fig. 5

Fig. 6

European
Patent Office

**EUROPEAN SEARCH
REPORT**

Application Number

**EP 90 31 1504**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | GB-A-2 108 565  (METALLIFACTURE LTD) <br> * Claims 1,4; figures 3,4 * <br> — — — | 1,4 | F 16 B <br> 37/04 <br> F 16 B 45/00 <br> B 23 P 11/00 |
| A | FR-A-2 599 097  (VICKERS RONEO S.A.) <br> * Page 4, lines 17-30; figures 1,7 * <br> — — — | 1 | |
| A | FR-A-1 386 323  (VALLOUREC) <br> * Page 4, left-hand column, lines 5-13; figure 1 * <br> — — — | 1,2 | |
| A | AU-B-4 296 30  (AITKEN) <br> * Page 5, lines 4-12; figures 2,4 * <br> — — — | 2-4 | |
| A | US-A-2 611 633  (WEBSTER) <br> * Column 3, lines 53-64; figures 1,5 * <br> — — — — — | 1 | |

TECHNICAL FIELDS
SEARCHED (Int. Cl.5)

F 16 B

The present search report has been drawn up for all claims

| Place of search | Date of completion of search | Examiner |
|---|---|---|
| The Hague | 04 March 91 | CALAMIDA G. |